(19) **Europäisches Patentamt**
**European Patent Office**
**Office européen des brevets**

(11) **EP 3 227 579 B1**

(12) # EUROPÄISCHE PATENTSCHRIFT

(45) Veröffentlichungstag und Bekanntmachung des Hinweises auf die Patenterteilung:
**26.02.2025 Patentblatt 2025/09**

(21) Anmeldenummer: **15808539.9**

(22) Anmeldetag: **24.11.2015**

(51) Internationale Patentklassifikation (IPC):
***F16F 7/116*** (2006.01)

(52) Gemeinsame Patentklassifikation (CPC):
**F16F 7/116;** F05B 2260/502; Y02B 10/30;
Y02E 10/72; Y02E 10/728

(86) Internationale Anmeldenummer:
**PCT/EP2015/002363**

(87) Internationale Veröffentlichungsnummer:
**WO 2016/087030 (09.06.2016 Gazette 2016/23)**

(54) **ADAPTIVER PENDELTILGER MIT VERTIKALER FEDERVORRICHTUNG**

ADAPTIVE OSCILLATION DAMPER HAVING A VERTICAL SPRING MECHANISM

AMORTISSEUR DE VIBRATIONS ADAPTATIF MUNI D'UN SYSTÈME DE RESSORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2014 EP 14004123**

(43) Veröffentlichungstag der Anmeldung:
**11.10.2017 Patentblatt 2017/41**

(73) Patentinhaber: **ESM Energie- und Schwingungstechnik Mitsch GmbH**
**64646 Heppenheim (DE)**

(72) Erfinder:
• **DÖRSAM, Mathias**
**D-69488 Birkenau (DE)**
• **SEEGER, Michael**
**D-64686 Lautertal (DE)**

(74) Vertreter: **Benz, Jürgen**
**Kanzlei Heumann, Benz**
**Spessartring 63**
**64287 Darmstadt (DE)**

(56) Entgegenhaltungen:
CN-Y- 200 949 272    DE-A1- 102012 222 191
JP-A- S57 140 942    SU-A1- 1 076 662

**Beschreibung**

Die Erfindung betrifft einen Pendeltilger zur Dämpfung von unerwünschten Schwingungen in schwingungssensitiven Systemen, zum Beispiel hohen Bauwerken und Türmen, insbesondere Windkraftanlagen.

Die Erfindung betrifft insbesondere einen Pendeltilger dessen Schwingungscharakteristika und damit Dämpfungsfähigkeiten, wie Frequenz und Amplitude, über einen weiten Bereich einstellbar ist. Dies wird erfindungsgemäß durch eine Federvorrichtung erreicht, welche in vorwiegend vertikaler Richtung wirkt und in ihrer Gesamtheit eine vorwiegend progressive oder nicht-lineare Federkennlinie aufweist.

Insbesondere Windkraftanalgen (WKA) sind schwingungsanfällige Systeme. Um die Schwingamplitude der WKA unter Resonanzanregung gering zu halten, werden üblicherweise Dämpfungsvorrichtungen in das System WKA integriert. Diese Dämpfungstilger müssen auf die Resonanzfrequenz der jeweiligen WKA abgestimmt werden. Die Steifigkeit der WKA, deren Masse sowie die Steifigkeit des Fundaments, die auch von den Bodenbeschaffenheiten abhängt, bestimmt hierbei primär die Eigenfrequenz der WKA.

Ein steifes Fundament führt zu einer hohen Resonanzfrequenz der WKA und umgekehrt. Eine geringere Masse führt zu einer höheren Eigenfrequenz der WKA und umgekehrt. Bei der Aufstellung der Anlage trifft genau diese Situation zu. Dabei gibt es temporäre Zustände, bei denen lediglich der Turm ohne Gondel und Rotor durch den Wind in Resonanz angeregt werden kann. Für diesen Fall liegt die Eigenfrequenz der halb fertigen WKA weit höher als bei der späteren fertig installierten Anlage. Ähnliches kann beim Errichten oder Bau von hohen schlanken Bauwerken (Türme, Hochhäuser etc.) vorliegen.

Um eine optimale Dämpferleistung erhalten zu können, muss die Tilgerfrequenz an die jeweilige Anlagenfrequenz, insbesondere Turmfrequenz in einem großen Bereich anpassbar und variable sein.

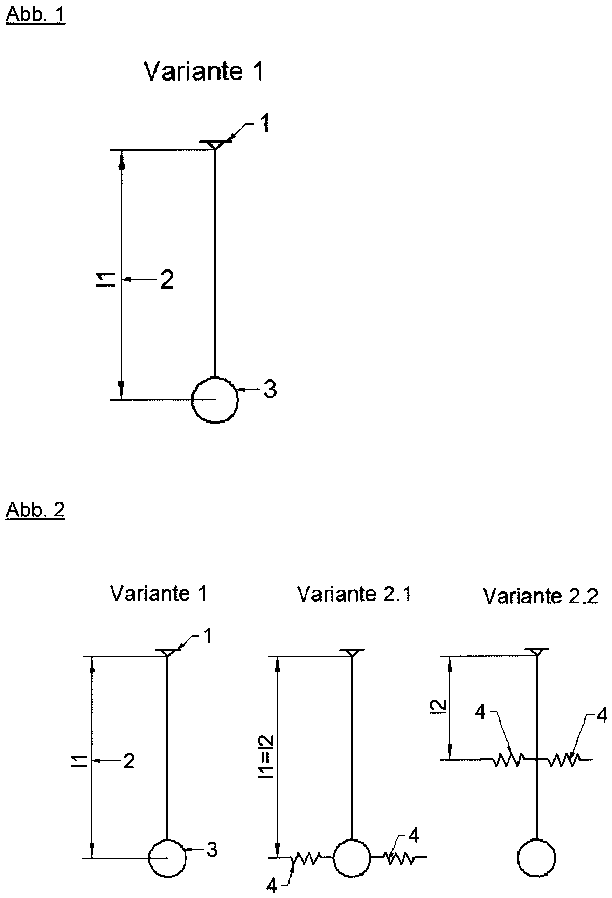

Wird beispielsweise ein einfacher Pendeltilger (Variante 1; Abb. 1) als Punktmasse betrachtet, so ist dessen Frequenz lediglich von der Pendellänge l1 (2) anhängig. Der physikalische Zusammenhang lässt sich wie folgt beschreiben:

$$f = \frac{1}{2*\pi} * \sqrt{\frac{g}{l1}}$$

g   → Gravitationskonstante [m/s^2]
l1   → Pendellänge [m]

Die Frequenz kann somit lediglich durch die Pendellänge beeinflusst werden. In der Praxis, insbesondere bei Platz beschränkten WKAs, lässt sich diese hingegen nur bedingt verändern.

Um weitere Einstellmöglichkeiten für die Tilgerfrequenz eines Pendeltilgers zu erhalten, kann üblicherweise die Variante 1 mit Horizontalfedern ergänzt werden. Bei Variante 2.1 greifen diese Horizontalfedern (4) in der Höhe der Tilgermasse (3) an. Bei Variante 2.2 sind diese in Richtung Aufhängepunkt (1) verschoben (Abb. 2).

Dieser physikalische Zusammenhang der Systeme 2.1 und 2.2 lässt sich wie folgt beschreiben:

$$f = \frac{1}{2*\pi} * \sqrt{\frac{C*l_2\text{^}2}{m*l_1\text{^}2} + \frac{g}{l_1}} \qquad \rightarrow \text{Gleichung 1; Variante 2.2}$$

$$f = \frac{1}{2*\pi} * \sqrt{\frac{C}{m} + \frac{g}{l_1}} \qquad \rightarrow \text{Gleichung 2; Variante 2.1}$$

g   → Gravitationskonstante [m/s^2]
l1   → Pendellänge [m]
l2   → Länge Drehpunkt bis Angriffspunkt Horizontalfeder [m]
C   → Federsteifigkeit Horizontalfeder [N/m]
m   → Tilgermasse [kg]

Es ist ersichtlich, dass sich die Tilgerfrequenz nun über mehrerer Parameter verstellen lässt.

Solche Lösungen sind bereits im Stand der Technik häufig beschrieben worden. Die Horizontalfedern (4) sind hierbei auf Zug belastet. Durch die Einbauposition sehen die Horizontalfedern (4), bei Variante 2.1, den gleichen Weg wie die Tilgermasse (3).

Hierdurch werden diese sehr hoch dynamisch belastet, was eine dauerfeste Auslegung, bei gegebenem Bauraum, sehr schwer bis unmöglich macht.

Um den Weg der Horizontalfedern (4) zu minimieren, können diese weiter in Richtung Aufhängpunkt Tilger (1) verschoben werden (Variante 2.2). In dieser Position sehen diese weniger Weg, allerdings muss in dieser Konstellation die Federsteifigkeit dieser Federn steigen, um gleiche Performance zu erzielen im Vergleich zu Variante 2.1. Zudem bedingt dies eine biegesteife Pendellänge (2), was die Verwendung von Seilen faktisch ausschließt.

Bewegt sich die Masse nach rechts, so wird die linke Horizontalfeder (4) weiter gezogen und die rechte Horizontalfeder (4) entlastet. In dieser Konstellation muss sichergestellt werden, dass die Entlastungsfeder nicht komplett entlastet wird. Dies bedingt, dass diese Horizontalfeder (4) in der Mittelstellung mehr vorgespannt ist, als der Schwingweg der Tilgermasse (3) betragen kann. Diese Tatsache macht die Montage schwierig.

Wie bereits erwähnt, ist die Tilgerfrequenz rein von der Federsteifigkeit der Horizontalfeder (4) und der Pendellänge abhängig. Soll nun eine andere Frequenz eingestellt werden, so muss bei gegebener, konstanter Pendellänge (2) eine Horizontalfeder (4) mit anderer Federsteifigkeit verbaut werden, wie dies ebenfalls häufig im Stand der Technik zu finden ist. Eine Erhöhung der Federvorspannkraft hat hingegen keinen Einfluss auf die Tilgerfrequenz.

Die SU 1076662 offenbart einen Schwingungsdämpfer für ein hohes, schlankes Bauwerk, das im Wesentlichen ein Pendel mit einer Dämpfermasse und eine Federvorrichtung in Form einer Spiralfeder umfasst, wobei die zylindrische Spiralfeder unterhalb der Dämpfermasse installiert ist und so angeordnet ist, dass die ganze Federkraft der Federvorrichtung im Wesentlichen in vertikaler Richtung wirkt. Die Dämpfermasse ist dabei über die Spiralfeder mit einem Befestigungspunkt am Bauwerk oder Gebäude verbunden. Auch bei dieser Lösung bleibt die Federsteifigkeit der Federvorrichtung im Wesentlichen gleich, und die Tilgerfrequenz kann ohne andere Maßnahmen nicht verändert werden.

Somit bestand die Aufgabe, einen Pendeltilger bereitzustellen, durch welchen die Tilgerfrequenz bei unveränderter Pendellänge auf einfache Weise variable einstellbar ist.

Es wurde nun gefunden, dass durch Pendeltilger, die mit relativ-kurzen Vertikalfedern als Dämpfungseinheit ausgestattet sind, welche Bereiche mit unterschiedlichen Federsteifigkeiten bei einer progressiven oder nicht-linearen Gesamt-Federkennlinie aufweisen, die gestellte Aufgabe gelöst werden kann.

Gegenstand der Erfindung ist somit ein Schwingungstilger für hohe schlanke Bauwerke und Anlagen, welcher im Wesentlichen ein Pendel mit einer Tilgermasse und eine Federvorrichtung umfasst, wobei die Federvorrichtung eine oder mehrere Vertikalfedern umfasst und unterhalb der Tilgermasse so angebracht ist, dass ihre Gesamt-Federkraft im Wesentlichen in vertikaler Richtung wirkt, und die Tilgermasse über die Federvorrichtung, direkt oder indirekt mit einem Befestigungspunkt in der Anlage oder in dem Bauwerk unterhalb des Schwingungstilgers verbunden ist. Dabei umfasst die Federvorrichtung erfindungsgemäß entweder (i) eine Vertikalfeder, welche über ihre Länge verteilt, mindestens zwei Federbereiche mit unterschiedlicher Federsteifigkeit bei einer nicht-linearen oder progressiven Gesamt-Federkennlinie aufweist, oder (ii) zwei Vertikalfedern, welche in Reihenschaltung oder durch Parallelschaltung miteinander verbunden sind und unterschiedliche Federsteifigkeiten bei einer nicht-linearen oder progressiven Gesamt-Federkennlinie aufweisen.

In einer bevorzugten Ausführungsform der Erfindung besitzt die Federvorrichtung einen ersten Federbereich mit einer ersten definierten Federsteifigkeit und einen zweiten Federbereich mit einer zweiten definierten Federsteifigkeit, die von der ersten Federsteifigkeit unterschiedlich ist. So liegt erfindungsgemäße die erste Federsteifigkeit in einem Bereich < 200N/mm, vorzugsweise < 150N/mm bzw. < 100 N/mm, beispielsweise zwischen 3 und 200N/mm, vorzugsweise zwischen 30 und 150N/mm, während die zweite Federsteifigkeit in einem Bereich > 200N/mm, vorzugsweise > 500N/mm bzw. >1000 N/mm, beispielsweise zwischen 200 und 3000 N/mm, vorzugsweise zwischen 500 und 1500 N/mm liegt.

Die erfindungsgemäße Federvorrichtung umfasst eine oder mehrere im Wesentlichen vertikale bzw. vertikal wirksame Federn, die als Druck und / oder Zugfedern einsetzbar sind. Unter "im Wesentlichen vertikal" wird erfindungsgemäß die senkrechte Ausrichtung oder Wirkung der Feder inklusive eine Abweichung von maximal 30° verstanden. Unter einer "Vertikalfeder" wird dementsprechend eine Feder verstanden, welche "im Wesentlichen vertikal" ist.

Umfasst die Federvorrichtung des erfindungsgemäßen Pendeltilgers lediglich eine Vertikalfeder, so werden die unterschiedlichen Federsteifigkeiten durch verschiedene Bereiche entlang der Feder (7) wahrgenommen, so dass die Feder als Ganzes eine progressive Federkennlinie aufweist. Hierdurch ist es möglich, dass im Normalbetrieb eine weiche Feder wirkt und bei Extremereignissen eine steife Feder die Tilgermasse (3) am auslenken hindert. Dies kann beispielsweise durch unterschiedliche Wicklung (Dichte, Durchmesser,) oder durch unterschiedliche Materialien oder unterschiedliche Dicke des Federdrahtes erreicht werden. Durch entsprechende Gestaltung der Feder ist es auch möglich, dass die Federbereiche innerhalb der Feder nacheinander auf Block gehen, was die Federsteifigkeit über der Tilgeramplitude ansteigen lässt.

In einer anderen Ausführungsform der Erfindung umfasst die Federvorrichtung zwei oder mehrere, beispielsweise zwei, drei, vier, fünf oder sechs Vertikalfedern, wobei diese zwei, drei, vier, fünf, sechs oder mehrere Vertikalfedern in Reihe oder parallel geschaltet sein können. Auch Kombinationen von Reihen- und Parallelschaltung sind prinzipiell möglich. Auch hier kann durch Einflussnahme auf bestimmte Federn, die ebenfalls als Zug- und Druckfedern ausgebildet sein können, Einfluss auf die Progression der Federkennlinie genommen werden.

In einer weiteren Variante der Erfindung können mehrere Vertikalfedern parallel angreifen. Durch Wegnahme / Zuführen von Vertikalfedern kann die Frequenz zusätzlich/ebenfalls verändert werden. Es ist ferner eine Kombination aus Horizontalfedern und Vertikalfedern denkbar, sowie der Ersatz einzelner Federn in einem solchen Verbund durch entsprechende Gewichte, wodurch letztlich die Frequenz erhöht, bzw. bei Entfernung des Gewichtes, erniedrigt werden kann.

In der Regel weisen diese verschiedenen Vertikalfedern oder Gruppen von Vertikalfedern ein definierte von den anderen Vertikalfedern oder Gruppen von Vertikalfedern unterschiedliche Federsteifigkeit auf, so dass ein gewünschter und an die Bedingungen der zu dämpfenden Anlage angepasster größerer oder kleinerer Federsteifigkeitsbereich abgedeckt werden kann, wodurch eine variable progressive Federkennlinie der Gesamtfedervorrichtung eingestellt werden kann.

Gegenstand der Erfindung ist insbesondere ein entsprechender Schwingungstilger, der mindestens zwei Vertikalfedern unterschiedliche Federsteifigkeit aufweisen, wobei die erste Vertikalfeder eine Federsteifigkeit von > 3N/mm bis < 200N/mm, vorzugsweise 50 bis 150N/mm und die zweite Vertikalfeder eine Federsteifigkeit von > 200N/mm bis < 3.000N/mm, vorzugsweise 300 bis 1500 N/mm aufweist.

Wie bereits weiter oben dargelegt ist es wünschenswert, den Ausschlag des Pendels bei auftretenden Schwingungen in der Anlage über den gesamten Bereich möglichst gering zu halten, was vor allem aus Platzgründen in den meist sehr schmalen Türmen einer WKA oder eines anderen hohen Bauwerks sinnvoll ist. Dies bedeutet, dass der Abstand zwischen Pendelmasse, an der die Federvorrichtung auf der einen Seite direkt oder über ein Stück Seil, Stab oder Stange befestigt ist, und dem Befestigungspunkt, der in der Anlage unterhalb des Pendeltilgers und unterhalb der Federvorrichtung angebracht ist und der wiederum direkt oder über ein Stück Seil, Stab oder Stange mit dem anderen Ende der Federvorrichtung verbunden ist, bei mittleren bis größeren Anlagen nicht größer als 5 oder 6m, vorzugsweise < 3m, insbesondere < 2m, beispielsweise 0.5m bis 5.0m, vorzugsweise 1.0 bis 3.0m sein sollte.

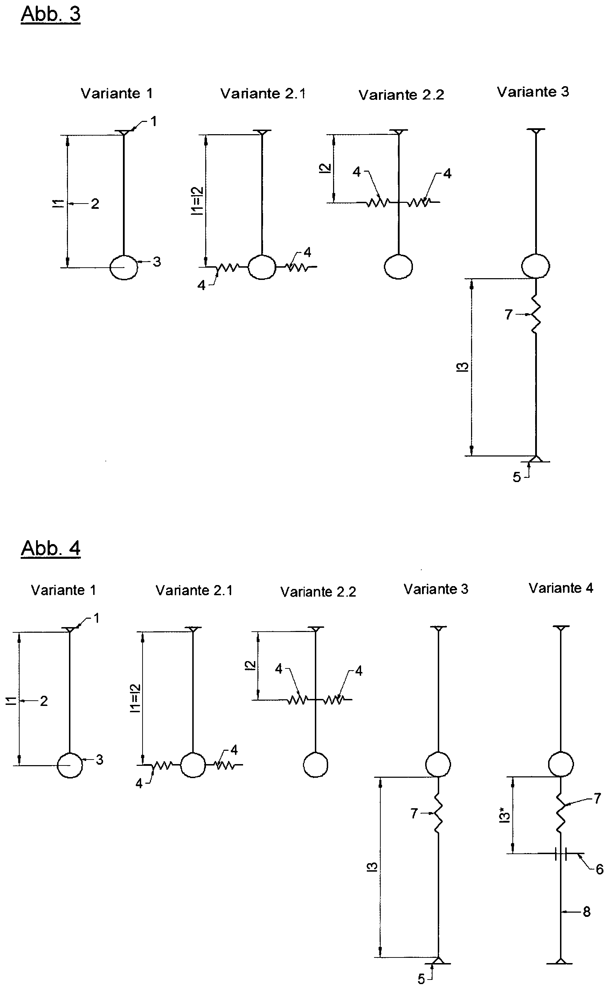

Erfindungsgemäß wird also durch die Verwendung von Vertikalfedern anstelle von Horizontalfedern Einfluss auf die Tilgerfrequenz genommen. In Variante 3 (Abb. 3) werden diese Horizontalfedern (4) durch eine/mehrere Vertikalfedern (7) ersetzt.

Der physikalische Zusammenhang lässt sich für eine Punktmasse wie folgt beschreiben:

$$f = \frac{1}{2*\pi} * \sqrt{\frac{m*g + F_F*(1+\frac{l_1}{l_3})}{m*l_1}} \qquad \rightarrow \text{Gleichung 3; Variante 3 + 4 +5}$$

g    → Gravitationskonstante [m/s^2]
l1    → Pendellänge (2) [m]
l3    → Länge Anbindpunkt Seil (5) und Tilgermasse (3) [m]
$F_F$    → Vorspannkraft Vertikalfeder (7) [N/m]
m    → Tilgermasse (3) [kg]

Es ist ersichtlich, dass sich nun über mehrerer Parameter die Tilgerfrequenz verstellen lässt. In dieser Konstellation lässt sich die Tilgerfrequenz durch die vertikale Vorspannkraft und nicht durch die Federsteifigkeit der Vertikalfeder (7) beeinflussen. Dies hat den Vorteil, dass sich mit einer Vertikalfeder (7) ein ganzer Frequenzbereich abdecken lässt und nicht wie bei dem Stand der Technik die Feder gegen eine mit anderer Federsteifigkeit getauscht werden muss . Aus dem Hausgebrauch, ist dieses Phänomen von einer Gitarrensaite bekannt. Wird bei dieser die Vorspannkraft erhöht, so ist der Ton / Frequenz höher. Die Federsteifigkeit der Saite bleibt hierbei konstant.

Zudem ist der dynamische Weg der Vertikalfeder (7), in Bezug zu Variante 2, bei gleichem Weg der Tilgermasse (3), kleiner. Dies ermöglicht eine dauerfeste Auslegung der Feder. Je länger hierbei das Maß l3 ist, desto kleiner wird die dynamische Längenänderung der Vertikalfeder (7) in Bezug zur Bewegung der Tilgermasse (3). Je länger hierbei das Maß l3 ist, desto geringer ist der Einfluss der Vertikalfeder (7) auf die Tilgerfrequenz. Dieser Effekt kann positiv genutzt werden, indem, wie bei einer Gitarrensaite auch, das Maß l3 auf das Maß l3* verkürzt wird (Variante 4, Abb. 4). Hierdurch steigt die Tilgerfrequenz bei gleicher Vorspannkraft der Vertikalfeder deutlich an. Diese Verkürzung kann durch einen Anschlagring (6) realisiert werden, welcher in vertikaler Richtung verschiebbar oder auch auf eine Position festgelegt gelagert ist. In letztem Fall stellt dieser Anschlagring (6) den fixen Anschlagpunkt der Feder da.

In einer weiteren Ausführungsform der Erfindung weist der erfindungsgemäße Tilger eine verschiebbare oder fest montierbare Anschlag- oder Befestigungsvorrichtung zwischen dem unteren Ende der Federvorrichtung und dem Befestigungspunkt auf der Anlage auf, wodurch der Abstand zwischen Befestigungspunkt und Federvorrichtung verkürzt und verlängert werden kann, so dass durch die dadurch bedingte Dehnung oder Stauchung der Federvorrichtung die Frequenz des Tilgers variabel gestaltbar ist. Wie bereits oben beschrieben, wird während der Errichtungsfase der WKA eine deutlich höhere Tilgerfrequenz benötigt. Diese lässt sich gemäß Variante 4 durch die Verkürzung auf Maß l3*

realisieren. Ist nun die Anlage komplett errichtet, wird eine deutlich geringere Tilgerfrequenz benötigt. Um dieser Anforderung gerecht zu werde, wird der Anschlagring (6) ausgebaut oder nach unten verschoben. Die Tilgerfrequenz sinkt, da nun Maß I3 und nicht I3* die Tilgerfrequenz bestimmt. Das Feintuning der Tilgerfrequenz kann nun über eine Erhöhung /Minimierung der Vorspannkraft der Vertikalfeder (7) erfolgen. Dabei ist darauf zu achten, dass sich die Vertikalfeder (7) über dem Anschlagring (6) liegt. Bewegt sich die Tilgermasse (3) in dieser Konstellation, so wird Relativbewegung zwischen dem Seil (8) und dem Anschlagring (6) vermieden. Umgekehrt kann durch Hochschieben oder Einbringen der Anschlagvorrichtung die Tilgerfrequenz erhöht werden.

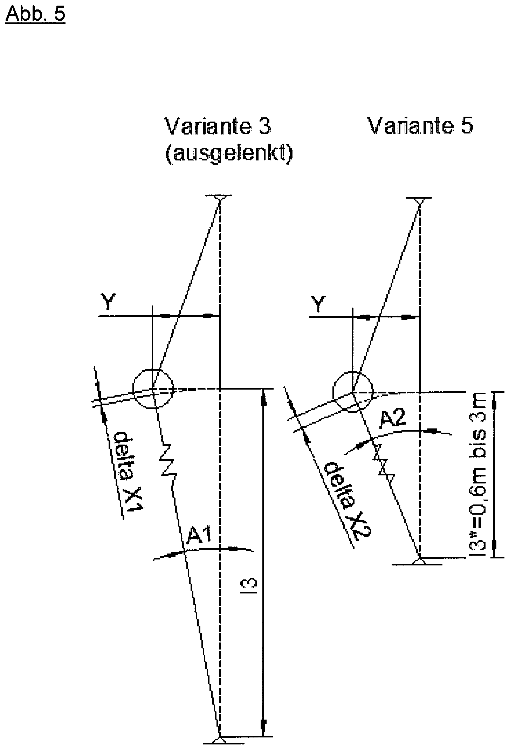

Wird ein solcher oder ähnlicher Tilger in eine Windkraftanlage eingebaut, so können durch äußere Einflüsse (z.B.: Notausschaltung, Böen, Abschaltvorgänge) große Amplituden der Tilgermasse (3) resultieren. Um den Schwingweg der Tilgermasse (3) in diesen Situationen gering zu halten (was erforderlich sein kann, um das Anschlagen des Pendels an die Turmwand zu verhindern), sollte das Maß I3* kurz gewählt werden (z.B. zwischen 0,3m und 6m). Es ergibt sich Variante 5 (Abb. 5) wie folgt:

Wird nun, in Kombination mit der kurzen Länge von I3*, eine Vertikalfeder (7) verbaut, welche eine große Federsteifigkeit besitzt, so resultieren wesentlich kleinere Auslenkwege (Y) der Tilgermasse (3) im Vergleich zu Variante 3 (ausgelenkt) mit kleinerer Federsteifigkeit und größerem I3. Je kleiner das Maß I3* gewählt wird, desto größer wird der Auslenkwinkel (A2) der Vertikalfeder (7), bei gleichem Auslenkweg (Y) der Tilgermasse (3). Hieraus resultiert, ein größerer Schrägzug der Feder, welcher der Bewegung der Tilgermasse (3) entgegenwirkt und die Tilgermasse während Betrieb und Extremereignis in ihren Amplituden begrenzt.

Bei Variante 5 resultiert eine größere Längenänderung (delta X2) der Vertikalfeder (7) im Vergleich zu Variante 3 (ausgelenkt), bei gleichem Auslenkweg (Y). Die hieraus resultierende Federkraftzunahme errechnet sich wie folgt:

$$Federkraftzunahme = C * delta\ X$$

C        $\rightarrow$ Federsteifigkeit Feder (7)

delta X    $\rightarrow$ Längenänderung der Feder (7) während Auslenkung der Tilgermasse (3)

Aus der Formel wird ersichtlich, dass bei Variante 5 die Federkraftzunahme in größerem Maße ansteigt als bei Variante 3 (ausgelenkt).

Wird nun eine Vertikalfeder (7) mit einer großen Federsteifigkeit in einen entsprechenden Pendeltilger verbaut, so steigt bereits bei kleinen Tilgeramplituden die Federkraft deutlich über Sollniveau an. Nach Gleichung 3 ist ersichtlich, dass hierdurch die Tilgerfrequenz ebenfalls deutlich ansteigen wird, was sich wiederum negativ auf die Tilgerwirkung auswirkt.

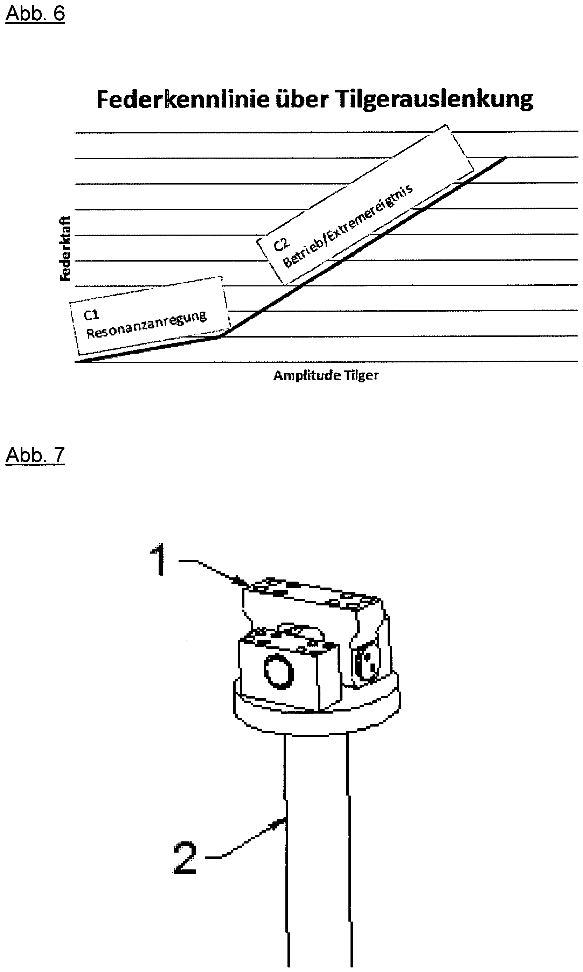

Diese Problem kann dadurch gelöst werden, dass ein Federkraftverlauf der Vertikalfeder (7) über der Tilgeramplitude gemäß Abb. 6 angestrebt werden sollte. Dies kann erfindungsgemäß durch eine vertikale Federvorrichtung erreicht werden, die eine progressive bzw. nicht-lineare Federkennlinie über die Tilgerauslenkung aufweisen kann.

Hierbei wird in einen Bereich "Resonanzanregung" und "Betrieb/Extremereignis" unterschieden. Ein passiver Tilger (wie hier beschrieben) kann nur bei harmonischer Kraftanregung wirken. Diese harmonische Kraftanregung liegt nur bei "Resonanzanregung" vor. Im Betrieb oder während Extremereignissen liegt hingegen eine stochastische Kraftanregung mit großen Tilgeramplituden vor. Eine Tilgerwirkung ist bei diesen Anlagenzuständen mit dem hier beschriebenen passiven Tilger generell nicht gegeben. Die Anforderung liegt vielmehr darin die Tilgeramplituden bei Betrieb/Extremereignissen klein zu halten und nur bei Resonanzanregung (kleine Tilgeramplituden) eine Tilgerwirkung sicher zu stellen.

Die Federsteifigkeit C1 der Vertikalfeder (7) ist im Resonanzbereich klein. Steigen nun die Tilgeramplituden bei Betrieb oder Extremereignissen an, gelangt der Tilger in den Bereich mit hoher Federsteifigkeit C2. Die Rückstellkräfte der Vertikalfeder (7) steigen somit deutlich an, was die Tilgeramplituden in diesen Anlagenzuständen deutlich reduziert. Das Ganze ist in der Kombination mit der kurzen Vertikalfeder (7) aus Variante 5 zu sehen, was zusätzlich die Rückstellkomponente erhöht.

Durch die Kombination einer relativ kurzen (0.3m - 3m) vertikalen Federvorrichtung mit progressiver Federkennlinie kann erfindungsgemäß ein in Frequenz und Amplitude variabler Pendeltiger zur Verfügung gestellt werden, welcher bei Extremzuständen, Normalzuständen und Zuständen, wie sie beim Errichten, Verändern oder beim Abbau einer schwingungssensitiven Anlage oder Bauwerk eingesetzt werden kann. Hierdurch kann der Pendeltilger innerhalb des Turmes größer gebaut werden, ohne dass Kollisionen mit den Wänden des Turmes oder des Gebäudes oder den darin befindlichen Einbauten zu befürchten sind. Ferner kann auf einen zusätzlichen Anschlag verzichtet werden, da die Tilgeramplituden generell kleiner ausfallen.

In einer weiteren Ausführungsform besitzt der erfindungsgemäße Schwingungstilger zusätzlich eine mechanische oder hydraulische, mobile oder fest montierte Vorrichtung zur Veränderung und Anpassung der Vorspannung der Federvorrichtung, in dem die Federvorrichtung oder Teile davon Druck- oder Zugbelastungen ausgesetzt werden.

Gegenstand der Erfindung ist somit auch ein entsprechender Schwingungstilger, bei dem der Abstand zwischen Befestigungspunkt und Federvorrichtung mittels einer verschiebbaren oder fest montierten Anschlag- oder Befestigungsvorrichtung verkürzt und wieder verlängert werden kann, so dass durch die dadurch bedingte Dehnung oder Stauchung der Federvorrichtung die Frequenz des Tilgers variiert bzw. adaptiert werden kann. Gegenstand der Erfindung ist ferner auch ein Schwingungstilger, der zusätzlich eine mechanische oder hydraulische, mobile oder fest montierte Vorrichtung zur Veränderung und Anpassung der Vorspannung der Federvorrichtung umfasst.

Nach dem Stand der Technik wird die Pendellänge (2) bei einem Pendeltilger durch Seile realisiert. Hierdurch kann sich der Tilger torsional in den Seilen verdrehen. Die Vertikalfeder (7) und auch die Dämpfer müssten somit dieser Verdrehung folgen, was technisch zu Fehlfunktionen führen würde. In einer alternativen erfindungsgemäßen Ausführungsform kann die Pendellänge (2) durch ein torsionssteifes Element (Rohr) ersetzt werden. Gleichzeitig hierzu muss der obere Aufhängpunkt des Tilgers (1) durch ein variables Gelenk, beispielsweise ein Kardangelenk, ausgeführt werden. Hierdurch wird ein torsionales Verdrehen verhindert, bei einer möglichen Bewegung der Tilgermasse (3) um 360° (Abb. 7). Gegenstand der Erfindung ist somit ein entsprechender Schwingungstilger bei dem das Pendel aus einem Stab oder Rohr besteht, an dessen unterem Ende die Tilgermasse angebracht ist, welche einen Befestigungspunkt für die Federvorrichtung aufweist, und an dessen oberen Ende ein Gelenk angebracht ist, dass die freie Bewegung des Pendels um 360° sicherstellt, so dass torsionale Verdrehungen unmöglich sind.

Der obere Aufhängpunkt des Tilgers kann je nach Beschaffenheit der Anlage, des Turmes, des Bauwerkes am jeweiligen oberen Ende des Turmes, der Anlage oder des Bauwerkes erfolgen oder aber an einer beliebigen Position in der oberen Hälfte oder im oberen Drittel. Es ist auch möglich, dass die Tilgermasse (3) an einem oder mehreren Aufhängpunkten Tilger (1) aufgehängt ist. Zudem ist es auch vorstellbar, dass direkt an der Tilgermasse (3) und am Anbindpunkt Tilger (1) ein Kardangelenk verbaut wird und dazwischen ein torsional steifes Element verbaut wird.

Wie bereits mehrfach dargelegt eigenen sich die erfindungsgemäßen Tilger insbesondere für den Einbau in WKAs. Gegenstand der Erfindung ist somit auch eine Windkraftanlage, welche einen erfindungsgemäßen Schwingungstilger aufweist.

Gegenstand der Erfindung ist insbesondere die Verwendung des erfindungsgemäßen Tilgers zur Vermeidung und Reduzierung von Schwingungsereignissen während des Aufbaus und des Betriebes einer solchen Windkraftanlage oder andere schwingungssensitiven Bauwerken, aber auch zur Reduzierung und Vermeidung von großen Tilgeramplituden im Falle von schwingungsbedingten Extremereignissen und von Resonanz bedingten Schwingungen der Anlage oder des Bauwerkes im Normalzustand oder Normalbetrieb.

In der Beschreibung, den Abbildungen und in den Ansprüchen wird auf folgende Positionen Bezug genommen:

| 1 | Aufhängepunkt Tilger |
|---|---|
| 2 | Pendellänge |
| 3 | Tilgermasse |
| 4 | Horizontalfeder |
| 5 | Anbindepunkt Seil |
| 6 | Anschlagring |
| 7 | Vertikalfeder |
| 8 | Seil |

**Patentansprüche**

1. Schwingungstilger für hohe schlanke Bauwerke und Anlagen im Wesentlichen umfassend ein Pendel mit einer Tilgermasse und eine Federvorrichtung, wobei

   (i) die Federvorrichtung eine oder mehrere Vertikalfedern umfasst und unterhalb der Tilgermasse so angebracht ist, dass ihre Gesamt-Federkraft im Wesentlichen in vertikaler Richtung wirkt, und
   (ii) die Tilgermasse über die Federvorrichtung, direkt oder indirekt mit einem Befestigungspunkt in der Anlage oder in dem Bauwerk unterhalb des Schwingungstilgers verbunden ist,

   **dadurch gekennzeichnet, dass** die Federvorrichtung eine Vertikalfeder umfasst, welche über ihre Länge verteilt, mindestens zwei Federbereiche mit unterschiedlicher Federsteifigkeit bei einer nicht-linearen oder progressiven Gesamt-Federkennlinie aufweist.

**2.** Schwingungstilger nach Anspruch 1, **dadurch gekennzeichnet, dass** die Vertikalfeder einen ersten Federbereich mit einer Federsteifigkeit von < 200 N/mm, und einen zweiten Federbereich mit einer Federsteifigkeit von > 200 N/mm besitzt.

**3.** Schwingungstilger für hohe schlanke Bauwerke und Anlagen im Wesentlichen umfassend ein Pendel mit einer Tilgermasse und eine Federvorrichtung, wobei

(i) die Federvorrichtung eine oder mehrere Vertikalfedern umfasst und unterhalb der Tilgermasse so angebracht ist, dass ihre Gesamt-Federkraft im Wesentlichen in vertikaler Richtung wirkt, und
(ii) die Tilgermasse über die Federvorrichtung, direkt oder indirekt mit einem Befestigungspunkt in der Anlage oder in dem Bauwerk unterhalb des Schwingungstilgers verbunden ist,

**dadurch gekennzeichnet, dass** die Federvorrichtung mindestens zwei Vertikalfedern umfasst, welche in Reihenschaltung oder durch Parallelschaltung miteinander verbunden sind und unterschiedliche Federsteifigkeiten bei einer nicht-linearen oder progressiven Gesamt-Federkennlinie aufweisen.

**4.** Schwingungstilger nach Anspruch 3, **dadurch gekennzeichnet, dass** die erste Vertikalfeder eine Federsteifigkeit von < 200 N/mm, und die zweite Vertikalfeder-eine Federsteifigkeit von > 200 N/mm besitzt.

**5.** Schwingungstilger nach Anspruch 4, **dadurch gekennzeichnet, dass** die erste Vertikalfeder eine Federsteifigkeit von > 3 N/mm bis < 200 N/mm und die zweite Vertikalfeder eine Federsteifigkeit von > 200 N/mm bis < 3.000 N/mm aufweist.

**6.** Schwingungstilger nach einem der Ansprüche 1 - 5, **dadurch gekennzeichnet, dass** die unterschiedliche Federsteifigkeit der mindestens einen Vertikalfeder durch unterschiedliche Wicklungen der Feder bewirkt wird.

**7.** Schwingungstilger nach einem der Ansprüche 1 - 6, **dadurch gekennzeichnet, dass** der Abstand zwischen Tilgermasse und Befestigungspunkt 0.5 m bis 5.0 m beträgt.

**8.** Schwingungstilger nach einem der Ansprüche 1 - 7, **dadurch gekennzeichnet, dass** der Abstand zwischen Befestigungspunkt und Federvorrichtung mittels einer verschiebbaren oder fest montierten Anschlag- oder Befestigungsvorrichtung verkürzt und wieder verlängert werden kann, so dass durch die dadurch bedingte Dehnung oder Stauchung der Federvorrichtung die Frequenz des Tilgers variiert werden kann.

**9.** Schwingungstilger nach einem der Ansprüche 1 - 8, **dadurch gekennzeichnet, dass** er zusätzlich eine mechanische oder hydraulische, mobile oder fest montierte Vorrichtung zur Veränderung und Anpassung der Vorspannung der Federvorrichtung umfasst.

**10.** Schwingungstilger nach einem der Ansprüche 1 - 9, **dadurch gekennzeichnet, dass** das Pendel aus einem Stab oder Rohr besteht, an dessen unterem Ende die Tilgermasse angebracht ist, welche einen Befestigungspunkt für die Federvorrichtung aufweist, und an dessen oberen Ende ein Gelenk angebracht ist, dass die freie Bewegung des Pendels sicherstellt, ohne dass hierbei torsionale Verdrehungen möglich sind.

**11.** Windkraftanlage, **dadurch gekennzeichnet, dass** sie einen Schwingungstilger gemäß einem der Ansprüche 1 - 10 aufweist.

**12.** Verwendung eines Schwingungstilgers gemäß einem der Ansprüche 1 - 10 zur Vermeidung und Reduzierung von Schwingungsereignissen während des Aufbaus und des Betriebes einer Windkraftanlage.

**13.** Verwendung eines Schwingungstilgers gemäß einem der Ansprüche 1 - 10 zur Reduzierung und Vermeidung von großen Tilgeramplituden im Falle von schwingungsbedingten Extremereignissen und von Resonanz bedingten Schwingungen der Anlage oder des Bauwerkes im Normalzustand oder im Normalbetrieb.

**Claims**

**1.** Vibration damper for tall, slender structures and installations, the damper substantially comprising a pendulum having a damper mass, and a spring device, wherein (i) the spring device comprises one or more vertical springs and is

**EP 3 227 579 B1**

mounted below the damper mass such that its total spring force acts substantially in the vertical direction, and (ii) the damper mass is connected via the spring device, directly or indirectly, to an attachment point in the installation or in the structure below the vibration damper,

**characterized in that** the spring device comprises a vertical spring which, distributed over its length, has at least two spring regions having a different spring stiffness for a non-linear or progressive overall spring characteristic.

2. Vibration damper according to claim 1, **characterized in that** the vertical spring has a first spring region having a spring stiffness of < 200 N/mm and a second spring region having a spring stiffness of > 200 N/mm.

3. Vibration damper for tall, slender structures and installations, the damper substantially comprising a pendulum having a damper mass, and a spring device, wherein (i) the spring device comprises one or more vertical springs and is mounted below the damper mass such that its total spring force acts substantially in the vertical direction, and (ii) the damper mass is connected via the spring device, directly or indirectly, to an attachment point in the installation or in the structure below the vibration damper,

**characterized in that** the spring device comprises at least two vertical springs which are connected to one another in series or in parallel and have different spring stiffnesses for a non-linear or progressive overall spring characteristic.

4. Vibration damper according to claim 3, **characterized in that** the first vertical spring has a spring stiffness of < 200 N/mm, and the second vertical spring has a spring stiffness of > 200 N/mm.

5. Vibration damper according to claim 4, **characterized in that** the first vertical spring has a spring stiffness of > 3 N/mm to < 200 N/mm and the second vertical spring has a spring stiffness of > 200 N/mm to < 3,000 N/mm.

6. Vibration damper according to one of claims 1 - 5, **characterized in that** the different spring stiffness of the at least one vertical spring is caused by different windings of the spring.

7. Vibration damper according to one of claims 1 - 6, **characterized in that** the distance between the damper mass and the attachment point is 0.5 m to 5.0 m.

8. Vibration damper according to one of claims 1 - 7, **characterized in that** the distance between the attachment point and the spring device can be shortened and lengthened again by means of a movable or fixed stop or attachment device, so that the frequency of the damper can be varied by the resulting stretching or compression of the spring device.

9. Vibration damper according to one of claims 1 - 8, **characterized in that** it additionally comprises a mechanical or hydraulic, movable or fixed device for changing and adjusting the preloading of the spring device.

10. Vibration damper according to one of claims 1 - 9, **characterized in that** the pendulum consists of a rod or tube, at the lower end of which the damper mass is mounted, the damper mass having an attachment point for the spring device, and at the upper end of which a joint is mounted, the joint ensuring free movement of the pendulum without torsional twisting being possible.

11. Wind turbine, **characterized in that** it has a vibration damper according to one of claims 1 - 10.

12. Use of a vibration damper according to one of claims 1 - 10 for preventing and reducing vibration events during the construction and operation of a wind turbine.

13. Use of a vibration damper according to one of claims 1 - 10 for reducing and avoiding large damper amplitudes in the case of extreme vibration-related events and resonance-related vibrations of the installation or the structure in the normal state or in normal operation.

**Revendications**

1. Amortisseur de vibrations pour des structures et des installations hautes et étroites, comprenant sensiblement un pendule comportant une masse d'amortissement et un dispositif à ressorts, dans lequel

(i) le dispositif à ressorts comprend un ou plusieurs ressorts verticaux et est monté en dessous de la masse

8

d'amortissement de sorte que sa force de ressort totale agit sensiblement dans la direction verticale, et

(ii) la masse d'amortissement est reliée, par l'intermédiaire du dispositif à ressorts, directement ou indirectement à un point de fixation dans l'installation ou dans la structure en dessous de l'amortisseur de vibrations,

**caractérisé en ce que** le dispositif à ressorts comprend un ressort vertical qui présente, réparties sur sa longueur, au moins deux zones de ressort comportant des raideurs de ressort différentes pour une caractéristique de ressort totale non linéaire ou progressive.

2. Amortisseur de vibrations selon la revendication 1, **caractérisé en ce que** le ressort vertical possède une première zone de ressort comportant une raideur de ressort < 200 N/mm, et une seconde zone de ressort comportant une raideur de ressort > 200 N/mm.

3. Amortisseur de vibrations pour des structures et des installations hautes et étroites, comprenant sensiblement un pendule comportant une masse d'amortissement et un dispositif à ressorts, dans lequel

(i) le dispositif à ressorts comprend un ou plusieurs ressorts verticaux et est monté en dessous de la masse d'amortissement de sorte que sa force de ressort totale agit sensiblement dans la direction verticale, et

(ii) la masse d'amortissement est reliée, par l'intermédiaire du dispositif à ressorts, directement ou indirectement à un point de fixation dans l'installation ou dans la structure en dessous de l'amortisseur de vibrations,

**caractérisé en ce que** le dispositif à ressorts comprend au moins deux ressorts verticaux qui sont reliés entre eux en série ou en parallèle et qui présentent des raideurs de ressort différentes pour une caractéristique de ressort totale non linéaire ou progressive.

4. Amortisseur de vibrations selon la revendication 3, **caractérisé en ce que** le premier ressort vertical possède une raideur de ressort < 200 N/mm, et le second ressort vertical possède une raideur de ressort > 200 N/mm.

5. Amortisseur de vibrations selon la revendication 4, **caractérisé en ce que** le premier ressort vertical présente une raideur de ressort allant de > 3 N/mm à < 200 N/mm et le second ressort vertical présente une raideur de ressort allant de > 200 N/mm à < 3 000 N/mm.

6. Amortisseur de vibrations selon l'une des revendications 1 à 5, **caractérisé en ce que** les raideurs différentes de l'au moins un ressort vertical sont dues à des enroulements différents du ressort.

7. Amortisseur de vibrations selon l'une des revendications 1 à 6, **caractérisé en ce que** la distance entre la masse d'amortissement et le point de fixation va de 0,5 m à 5,0 m.

8. Amortisseur de vibrations selon l'une des revendications 1 à 7, **caractérisé en ce que** la distance entre le point de fixation et le dispositif à ressorts peut être raccourcie et rallongée à nouveau au moyen d'un dispositif de butée ou de fixation déplaçable ou monté de manière fixe, de sorte qu'au moyen de l'allongement ou de la compression du dispositif à ressorts qui en résulte, la fréquence de l'amortisseur peut varier.

9. Amortisseur de vibrations selon l'une des revendications 1 à 8, **caractérisé en ce qu'**il comprend en outre un dispositif mécanique ou hydraulique, monté mobile ou fixe, permettant de modifier et d'adapter la précontrainte du dispositif à ressorts.

10. Amortisseur de vibrations selon l'une des revendications 1 à 9, **caractérisé en ce que** le pendule est constitué d'une tige ou d'un tube à l'extrémité inférieure de laquelle ou duquel est montée la masse d'amortissement qui présente un point de fixation pour le dispositif à ressorts, et à l'extrémité supérieure de laquelle ou duquel est montée une articulation qui assure le libre mouvement du pendule sans que des torsions soient possibles.

11. Éolienne, **caractérisée en ce qu'**elle présente un amortisseur de vibrations selon l'une des revendications 1 à 10.

12. Utilisation d'un amortisseur de vibrations selon l'une des revendications 1 à 10 pour éviter et réduire des événements vibratoires pendant l'installation et le fonctionnement d'une éolienne.

13. Utilisation d'un amortisseur de vibrations selon l'une des revendications 1 à 10 pour réduire et éviter de grandes amplitudes d'amortissement dans le cas d'événements extrêmes dus aux vibrations et de vibrations dues à la résonance de l'installation ou de la structure à l'état normal ou lors du fonctionnement normal.

Abb. 1

Variante 1

Abb. 2

Variante 1          Variante 2.1          Variante 2.2

## Abb. 3

Variante 1     Variante 2.1     Variante 2.2     Variante 3

## Abb. 4

Variante 1     Variante 2.1     Variante 2.2     Variante 3     Variante 4

Abb. 5

Variante 3
(ausgelenkt)

Variante 5

Abb. 6

## Federkennlinie über Tilgerauslenkung

C2
Betrieb/Extremereigtnis

C1
Resonanzanregung

Amplitude Tilger

Abb. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- SU 1076662